# FASCICULE DE BREVET EUROPEEN

(11) **EP 4 604 716 B1**
(45) Date de publication et mention de la délivrance du brevet: **12.08.2026**
(21) Numéro de dépôt: 23821725.1
(22) Date de dépôt: 23.11.2023
(51) Int. Cl.: A01G 9/16, A01G 13/24, A01G 17/14

(54) **DISPOSITIF MODULABLE POUR LE PALISSAGE**
MODULARE SPALIERVORRICHTUNG
MODULAR TRELLIS SYSTEM

(30) Priorité: 28.11.2022 FR 2212437
(43) Date de publication de la demande: 27.08.2025
(73) Titulaire: Société Landaise de Profilage Acier, 40700 Hagetmau (FR)
(72) Inventeur: CAZENAVE, Cédric, 64370 URDES (FR); MERLE, Guillaume, Québec, Québec J2H2Z8 (CA)
(74) Mandataire: Santarelli
(86) Numéro de dépôt international: PCT/FR2023/051846
(87) Numéro de publication internationale: WO 2024/115843

(56) Documents cités:
- EP-B1- 2 813 139
- AU-A1- 2019 202 039
- CN-A- 112 438 149
- KR-B1- 101 371 951
- US-B2- 10 631 471

## Description

### DOMAINE TECHNIQUE

La présente invention appartient au domaine des équipements agricoles tels que les piquets et concerne plus particulièrement un dispositif modulable pour le palissage et permettant notamment, de protéger des cultures de phénomènes climatiques intenses (neige, grêle, etc.)

La présente invention trouve une application directe dans la production viticole et l'arboriculture fruitière.

### ÉTAT DE LA TECHNIQUE

L'agriculture, plus précisément la production végétale, a toujours été dépendante des conditions climatiques des régions dans lesquelles sont cultivés les céréales, les fruits, les légumes et autres. Ainsi, certaines régions du monde sont plus propices que d'autres pour cultiver certains végétaux, du fait notamment d'un climat adapté, dont les températures favorisent le développement et la production desdits végétaux.

Depuis deux siècles, l'activité humaine a accru considérablement la quantité de gaz à effet de serre présente dans l'atmosphère. Cette concentration importante a pour conséquence notamment de dérégler l'équilibre climatique, qui se réajuste alors par le réchauffement de la surface terrestre.

Plusieurs secteurs sont impactés par ces réchauffements. L'activité agricole mondiale en est un exemple, et des adaptations locales sont mises en place afin de pouvoir poursuivre les cultures sensibles aux variations thermiques ainsi qu'à leurs conséquences (vents, pluies, phénomènes météorologiques extrêmes, etc.).

Ce réchauffement de la surface terrestre donne également des opportunités pour développer des cultures dans des régions qui auparavant ne présentaient pas de conditions climatiques favorables à ces dites cultures.

C'est le cas de la culture de la vigne, qui en général est cultivée entre les parallèles 50°N et 30°N dans l'hémisphère nord, et entre les parallèles 15°S et 40°S dans l'hémisphère sud, et dans lesquelles les hivers peuvent être qualifiés de doux, et durant lesquels, les périodes de gel sont rares et les quantités de neige tombées sont faibles, ne présentant alors pas ou peu de risques pour les cultures. De plus, on retrouve également des cultures de la vigne en altitude.

Dernièrement, l'augmentation des températures moyennes tout au long de l'année dans certaines régions permet maintenant d'y cultiver des vignes. En revanche, ces nouvelles régions de cultures ont des périodes hivernales durant lesquelles les quantités de chute de neige sont importantes, et pendant plusieurs semaines consécutives, ce qui a pour conséquence d'endommager les vignes.

Le document FR3068568A1 décrit un abri pour la culture des végétaux prévu pour être implanté sur une aire culture, et qui comprend principalement une structure porteuse comprenant une couverture, formée de deux pans de toiture, des modules de structure, des supports longiformes fixés aux modules de structure, prévus pour soutenir la couverture.

Par ailleurs, au moins un des pans est angulairement déplaçable entre une position angulaire extrême basse et une position angulaire extrême haute.

Aussi, le déplacement angulaire de l'un des deux pans de toiture peut être motorisé. En revanche, cet abri ne semble pas être conçu pour préserver les cultures de la neige. Au contraire, celui-ci doit permettre l'exposition au froid ainsi qu'à la neige certains types de culture.

Le document FR3121574A1 décrit un dispositif de protection d'une rangée de végétaux, comprenant une pluralité de poteaux, un élément de couverture et un dispositif d'enroulement et de déroulement de cet élément de couverture. L'élément de couverture peut être adapté spécifiquement à l'élément naturel, notamment la grêle, la pluie et le gel. En revanche, l'élément de couverture ne semble pas adapté ni être en capacité de résister mécaniquement au poids de la neige qui s'accumulerait sur ledit élément.

Le document EP3248455A1 décrit un dispositif pour protéger des plantes, des champs de culture ou d'autres champs, contre des événements naturels de nature destructive.

Ce dispositif comprend notamment des poteaux de support, une barre transversale supportée par lesdits poteaux de support, des premiers bras pouvant tourner entre une position fermée et une position ouverte dans laquelle ils dépassent des poteaux sur un côté du dispositif, et au moins un premier filet disponible dans une position enroulée ou déployée.

US 10,631,471 B2 divulgue un dispositif pour le palissage de culture, comportant un arceau et un piquet haut, l'arceau étant apte à être recouvert en partie ou intégralement par une bâche de protection, ledit arceau pouvant servir à positionner des fils de palissage au moyen d'une pluralité d'insert, et ledit piquet haut pouvant servir à positionner des fils de palissage au moyen d'une pluralité d'encoches.

Comme pour les dispositifs décrits dans les documents précédant, celui-ci ne semble pas être adapté à résister à d'importantes accumulations de neige sur l'élément de couverture, qui cèderait alors sous le poids de la neige tombée.

De plus, certaines de ces solutions peuvent ne pas être adaptées à des cultures denses, du fait de leur manque de compacité.

Enfin, les dispositifs décrits dans ces documents sont essentiellement conçus pour protéger les cultures d'évènements climatiques ponctuels, telle que la pluie, limitant ainsi les risques de développement de maladies et permettant de réduire l'usage de produits phytosanitaires.

Une autre alternative consiste à couvrir avec une bâche épaisse, mais cette technique est fastidieuse et lente à mettre en place. De plus, elle nécessite de mobiliser des opérateurs pendant plusieurs jours, main d'œuvre qui n'est pas tout le temps disponible.

Il est alors nécessaire de trouver des solutions innovantes, alliant modularité, compacité, pour faciliter leur mise en place ainsi que leur manipulation et gagner en efficacité, et qui plus est, qui soient économiques.

### PRÉSENTATION DE L'INVENTION

La présente invention vise à pallier tout ou partie des inconvénients présentés précédemment, et propose alors une solution innovante d'un dispositif de palissage qui est modulable selon deux configurations : l'une utilisée en hiver afin de protéger les plants du gel et des chutes de neiges qui peuvent être importantes dans certaines régions du globe, et l'autre utilisée lorsque les plants sont en culture. Par ailleurs, ce dispositif est conçu pour pouvoir supporter des charges importantes sur sa structure.

Ainsi, cette invention permet d'une part de cultiver des plants dans des régions où cela n'était pas possible du fait des hivers rudes que ces régions connaissent, en les protégeant notamment des chutes de neige, et d'autre part, de l'adapter ensuite comme support pour cultiver lesdits plants, et développer une économie locale autour de nouvelles cultures agricoles.

À cet effet, la présente invention vise un dispositif modulable pour le palissage de culture, comportant un piquet bas, un arceau, un piquet haut, ledit dispositif étant remarquable en ce que l'arceau et le piquet haut sont amovibles et s'adaptent un seul à la fois sur le piquet bas, que des extrémités de l'arceau étant enfoncées dans le sol, en ce que l'arceau étant apte à être recouvert en partie ou intégralement par une bâche de protection, ledit arceau pouvant servir à positionner des fils de palissage au moyen d'une pluralité d'insert, et ledit piquet haut pouvant servir à positionner des fils de palissage au moyen d'une pluralité d'encoche. L'aspect modulable du dispositif permet de changer aisément sa configuration, pour un usage soit de protection, soit de culture, tout en optimisant ses éléments constitutifs. Avantageusement, l'arceau du dispositif est maintenu sur le piquet bas au moyen d'une mâchoire dudit arceau, positionnant aisément et sans l'usage d'outils ledit arceau sur ledit piquet.

Selon une caractéristique particulière, l'arceau et la mâchoire sont solidaires entre eux.

De façon avantageuse, des crochets de la mâchoire maintiennent ladite mâchoire au niveau de languettes du piquet bas. De même, et afin de convenir à l'ensemble des piquets bas, la mâchoire est un élément dont les dimensions sont adaptables, notamment, celles des crochets.

Avantageusement, le piquet haut est maintenu sur le piquet bas au moyen d'une entretoise du piquet haut. De plus, cette entretoise a des dimensions qui s'adaptent à celles du piquet bas et du piquet haut.

Selon une autre caractéristique particulière, le piquet haut et l'entretoise sont solidaires entre eux.

De façon avantageuse, les extrémités de l'arceau sont aplaties ou profilées pour faciliter l'enfoncement de l'arceau dans le sol lors de l'installation du dispositif en configuration de protection.

Selon un mode de réalisation particulier, le piquet bas est sensiblement droit suivant une longueur dudit piquet.

Selon un autre mode de réalisation particulier, le piquet haut est sensiblement droit suivant une longueur dudit piquet.

Enfin, la présente invention a pour objet une rangée de culture comportant au moins un dispositif modulable pour le palissage de culture tel que présenté.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés.

### PRESENTATION DES DESSINS

Les figures sont données à titre purement illustratif pour une meilleure compréhension de l'invention sans en limiter la portée. Les différents éléments peuvent être représentés de manière schématique et ne sont pas nécessairement à la même échelle. Sur l'ensemble des figures, les éléments identiques ou équivalents portent la même référence numérique.

Il est ainsi illustré en :
[Fig. 1A] : une vue éclatée en perspective d'un dispositif modulable de palissage, selon un premier mode de réalisation de l'invention en configuration de protection ;
[Fig. 1B] : une vue éclatée en perspective du dispositif modulable de palissage, selon le premier mode de réalisation de l'invention en configuration de culture ;
[Fig. 2A] : une vue en perspective du dispositif modulable de palissage, assemblé, et en configuration de protection ;
[Fig. 2B] : une vue en perspective du dispositif modulable de palissage, assemblé, et en configuration de culture ;
[Fig. 3] : une vue de dessous en perspective d'un arceau du dispositif modulable de palissage ;
[Fig. 4] : une vue en perspective d'une entretoise du dispositif modulable de palissage, selon le premier mode de réalisation de l'invention ;
[Fig. 5] : une vue du dessus de l'entretoise insérée dans un piquet bas du dispositif modulable de palissage ;
[Fig. 6A] : une vue de côté en perspective d'une mâchoire du dispositif modulable de palissage, selon le premier mode de réalisation de l'invention ;
[Fig. 6B] : une vue de dessous en perspective de la mâchoire du dispositif modulable de palissage ;
[Fig. 7A] : une première vue de dessus en perspective de la mâchoire positionnée sur un piquet bas du dispositif modulable de palissage ;
[Fig. 7B] : une seconde vue de dessus en perspective de la mâchoire positionnée sur un piquet bas du dispositif modulable de palissage ;
[Fig. 8] : cinq vues de profil de section de piquets bas différents du dispositif ;
[Fig. 9] : une vue en perspective du dispositif modulable de palissage, selon un second mode de réalisation de l'invention, en configuration de culture ;
[Fig. 10] : une vue en perspective d'une entretoise du dispositif modulable de palissage, selon le second mode de réalisation de l'invention ;
[Fig. 11] une vue du dessus de l'entretoise insérée dans un piquet bas du dispositif modulable de palissage, selon le second mode de réalisation de l'invention ;
[Fig. 12] : une première vue en perspective d'une rangée de culture équipée du dispositif modulable de palissage.
[Fig. 13] : une seconde vue en perspective d'une rangée de culture équipée du dispositif modulable de palissage.

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à un dispositif modulable de palissage, permettant, dans une configuration de protéger des cultures d'intempéries (neige, gel, grêle, etc.) et dans une autre configuration de servie de support au palissage desdites cultures.

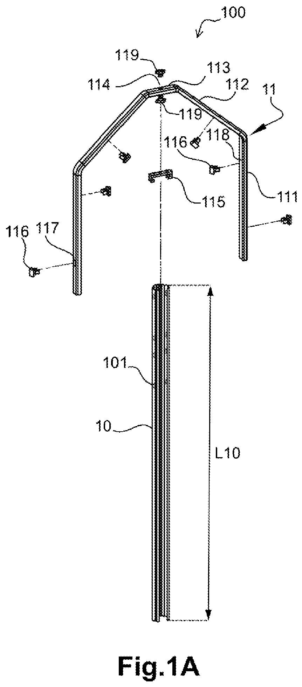

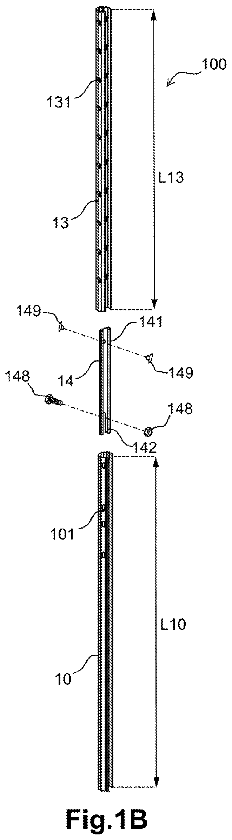

La figure 1A et la figure 1B représente des vues éclatées en perspective d'un dispositif 100 modulable de palissage, préférablement en acier.

La figure 1A représente une vue éclatée en perspective du dispositif 100 en configuration de protection, et comportant un arceau 11 ainsi qu'un piquet bas 10.

L'arceau 11, préférablement en forme de U inversé, comporte deux parties verticales 111, deux parties obliques 112 et une partie horizontale 113. Dans un mode de réalisation particulier, la forme de l'arceau est obtenue au moyen d'une unique pièce d'acier, qui est pliée selon les longueurs et angles souhaités, sans que cela ne soit une limite.

Les parties verticales 111 et les parties obliques 112 comportent au moins un orifice 117 ou des encoches 118 dans lesquels se loge un insert 116, préférablement en matière plastique. Les inserts 116 peuvent, par exemple, être clipsés ou vissés sur l'arceau 11.

Les inserts 116 sont utilisés afin de positionner des fils de palissage (non représentés sur la figure 1A) lorsque le dispositif est en configuration de protection. Dans cet exemple, l'arceau 11 peut accueillir six inserts 116 sans que cela ne représente un aspect limitatif de l'invention. De plus, les inserts 116 sont démontables et interchangeables.

Avantageusement, les fils de palissages ne trainant pas sur le sol, cela limite notamment le risque qu'ils soient arrachés ou endommagés lors de passages d'engins agricoles dans les cultures.

Afin de maintenir l'arceau 11 sur le piquet bas 10, une mâchoire 115 est fixée à l'arceau 11 préférablement au moyen d'un rivet 119 passant au travers d'un orifice 114. La mâchoire 115 peut être maintenue au niveau de l'arceau par d'autres technique de fixation telle que par boulonnage, soudage, sertissage ou collage. La mâchoire permet de saisir des bords du piquet bas 10 et ainsi contraindre les mouvements de translation dans le plan horizontal, de l'arceau 11 sur ledit piquet. Le piquet bas 10 a une longueur L10 de l'ordre de 1,20 m, dont près de la moitié, soit 0,60 m est enfoncée dans le sol afin d'assurer un maintien suffisant dudit piquet. Le piquet bas 10 comporte une multitude d'encoches 101 pouvant être de formes variées afin de positionner les différents types de fil de palissage existants dans le commerce.

La figure 1B représente une vue éclatée en perspective du dispositif 100 en configuration de culture.

Comme pour la figure 1A, le dispositif comporte le piquet bas 10, qui ne change pas entre la configuration de protection et la configuration de culture. Le piquet bas 10 est le seul élément qui n'est pas modulable entre ces deux configurations. En effet, le piquet bas 10 fait partie des fondations qui sont installées lors du palissage initial, et pour une durée de l'ordre de vingt ans. Les piquets qui sont utilisés conventionnellement, ne sont pas démontables et ne sont pas modulables. Il s'agit d'une évolution du dispositif 100 afin de pouvoir réexploiter une partie d'un piquet de vigne traditionnel, et ainsi minimiser la quantité d'éléments à utiliser.

Afin de passer le dispositif 100 en configuration de culture, le dispositif 100 comporte un système de réhausse au moyen d'un piquet haut 13, relié et maintenu mécaniquement au piquet bas 10 au moyen d'une entretoise 14.

Le piquet haut 13 comporte également une multitude d'encoches 131, espacées ou non régulièrement, et pouvant être de formes variées afin de positionner les différents types de fil de palissage existants dans le commerce. Lors de la croissance des plants, les encoches 131 permettent de repositionner les fils de palissage et ainsi adapter leur hauteur à la culture.

Le piquet haut 13 a une longueur L13 de l'ordre de 1 m. Ainsi, et pour cet exemple, lorsque le piquet bas 10 et le piquet haut 13 sont assemblés au moyen de l'entretoise 14, le piquet obtenu a une longueur hors-sol d'environ 1,60 m.

L'entretoise 14 est fixée sur le piquet haut 13 au moyen d'un rivet 149, passant au travers d'un trou 141, présent dans l'entretoise, et d'un trou oblong (non représenté sur la figure 1B). L'entretoise 14 peut également être fixée sur le piquet haut 13 par boulonnage, ou par tout autre technique connue par l'homme du métier permettant de maintenir des pièces entre elles, en pouvant les démonter ou non ultérieurement. Ce maintien garanti un positionnement optimal de l'entretoise 14 dans le piquet haut 13, tout en minimisant les manipulations effectuées par un opérateur lors des opérations de montages et de démontages. Par exemple, le piquet haut 13, assemblé avec l'entretoise 14 peuvent être simplement déposés au niveau du sol lorsque le dispositif 100 est en configuration de protection. Le piquet haut 13 et l'entretoise 14 étant maintenus de façon solidaire, cela limite également le risque d'éparpillement et facilite leurs stockages.

Dans le mode de réalisation préféré, l'entretoise 14 est fixée définitivement sur le piquet haut 13, et n'est donc amovible qu'au niveau du piquet bas 10.

L'ajustement de l'entretoise 14 dans le piquet bas 10 est réalisée au moyen d'une fente 142, dans laquelle un boulon 148 vient s'insérer.

Le trou oblong permet alors un ajustement précis, et avec un minimum de jeu, de la position du piquet bas 10 par rapport au piquet haut 13. De plus, la fente 142 permet également d'enfoncer le piquet haut 13 sans que les éléments de fixations ne supportent de pressions élevées.

Enfin, la fente 142 de l'entretoise 14 permet un montage ainsi qu'un démontage du piquet haut 13, sans retirer le boulon 148 présent sur le piquet bas 10. Ainsi, le changement de configuration est réalisé aisément tout en minimisant les actions à faire.

Dans le mode de réalisation préféré, le piquet bas 10 et le piquet haut 13 sont sensiblement droits. L'homme du métier peut en revanche tout à fait concevoir des piquets bas 10 et des piquets haut 13 qui présentent des incurvations, ou plus généralement, des profils selon leur longueur L10 et L13, différents d'un profil droit.

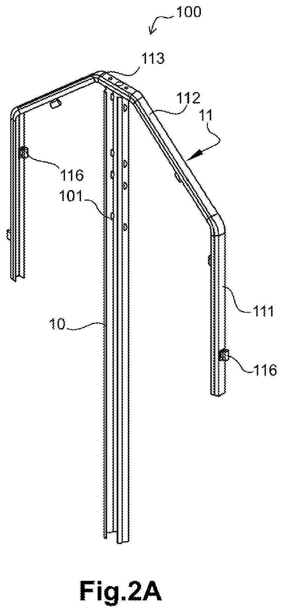

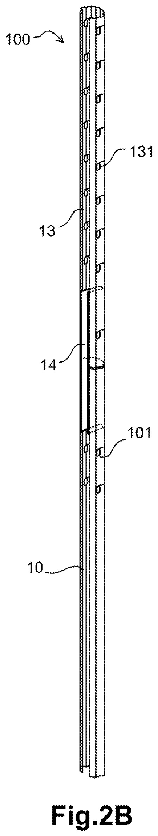

La figure 2A et la figure 2B représentent respectivement le dispositif 100 en configuration de protection et en configuration de culture, lorsque ledit dispositif est assemblé. Il est possible de constater la modularité du dispositif 100, qui conserve le piquet bas 10 dans chacune des configurations, le piquet bas 10 servant alors de base à l'arceau 11, pour la configuration de protection, et pour le piquet haut 13, pour la configuration de culture. Pour rappel, l'arceau 11 est maintenu sur le piquet bas 10 au moyen de la mâchoire 15 (non visible sur la figure 2A), et le piquet haut 13 est maintenu sur le piquet bas 10 au moyen de l'entretoise 14, chacun de ces éléments de fixation étant, dans le mode de réalisation préféré, solidaire respectivement à l'arceau 11 et au piquet haut 13.

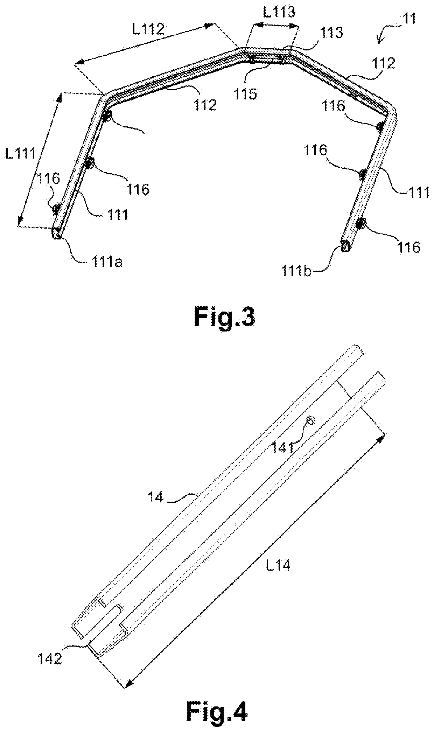

La figure 3 représente une vue du dessous et perspective de l'arceau 11 qui est complètement assemblé. Comme décrit précédemment, l'arceau 11 comporte cinq partie : deux parties verticales 111 d'une longueur L111, deux parties obliques 112 d'une longueur L112 et une partie horizontale 113 d'une longueur L113. Les dimensions et la forme de l'arceau 11 sont adaptables suivant le besoin.

Il est possible de constater sur la figure 3 la position de la mâchoire 115 au niveau de la partie horizontale 113. De plus, et dans ce mode de réalisation, les inserts 116 sont répartis soit sur la face intérieure de l'arceau 11, soit sur sa face extérieure.

Pour un mode de réalisation particulier, l'arceau 11 comporte des extrémités 111a et 111b qui sont aplaties ou profilées afin de faciliter l'enfoncement dans le sol dudit arceau.

La figure 4 représente une vue en perspective de l'entretoise 14 qui permet de maintenir mécaniquement le piquet haut 13 avec le piquet bas 10, lorsque le dispositif 100 est assemblé en configuration de culture. Dans cet exemple, l'entretoise 14 a une longueur L14 égale à 400 mm, sans que cela ne soit une limite à la présente invention.

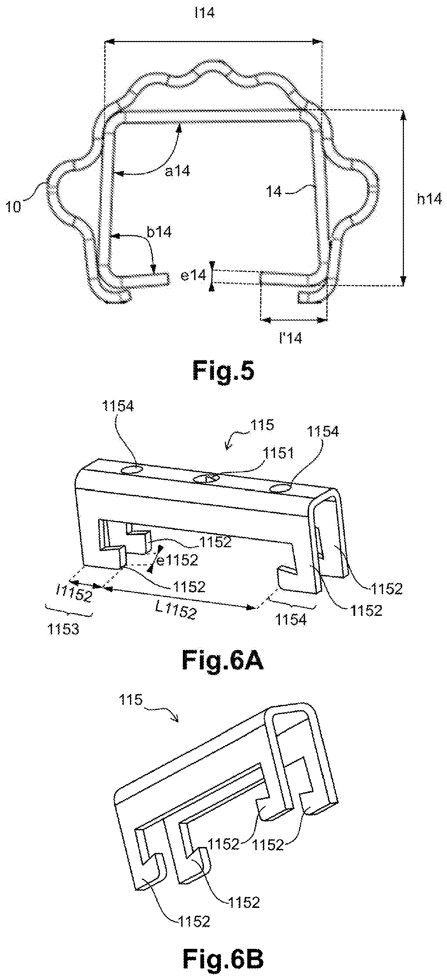

La figure 5 représente une vue de dessus de l'entretoise 14 lorsqu'elle est insérée dans le piquet bas 10. Dans la figure 4, le piquet haut 13 n'est volontairement pas représenté pour des raisons de lisibilités : l'entretoise 14 étant normalement fixée sur le piquet haut 13 en mode normal d'utilisation.

Afin d'obtenir un maintien mécanique qui limite les mouvements, l'ajustement entre l'entretoise 14 et le piquet bas 10 est minimal et suffisant pour permet un coulissement entre les deux pièces.

Par ailleurs, la section de l'entretoise est définie, dans ce mode de réalisation, par une largeur principale l14 de 39 mm, une largeur secondaire l'14 de 13 mm, une hauteur h14 de 32 mm, une épaisseur e14 de 2 mm, ainsi que par un premier angle a14 de 97° et un second angle b14 de 83°. Ces caractéristiques dimensionnelles sont données à titre d'exemple, l'homme du métier pouvant en définir d'autres afin de les adapter à des sections de piquet bas 10 différentes que celle représentée à la figure 5.

La figure 6A et la figure 6B représentent des vues en perspective de la mâchoire 115 qui permet de maintenir l'arceau 11 sur le piquet bas 10.

La mâchoire 115 comporte un trou de fixation 1151 dans lequel le rivet 119 est inséré, et qui passe au travers du trou 114 de la partie horizontale 113 de l'arceau 11, afin de fixer ladite mâchoire audit arceau, ainsi que deux trous de positionnement 1154 dans lesquels s'insèrent des plots utilisés lors de la fabrication de ladite mâchoire, lors de l'emboutissage.

De plus, la mâchoire 115 comporte des crochets 1152 regroupés, dans le mode réalisation préféré, en deux paires de crochets 1153 et 1154, lesdites paires se trouvant aux extrémités de ladite mâchoire.

Au niveau des paires de crochets 1153 et 1154, les deux crochets 1152 sont espacés d'une longueur e1152. De plus, les crochets présentent une longueur l1152, et les paires de crochets 1153 et 1154 sont espacés d'un écart L1152.

La longueur e1152, la longueur 11152 et l'écart L1152 sont fonctions du profil de la section du piquet bas 10. Ainsi, l'arceau 11 se fixe aisément au piquet 10, en adaptant les caractéristiques dimensionnelles de la mâchoire 115.

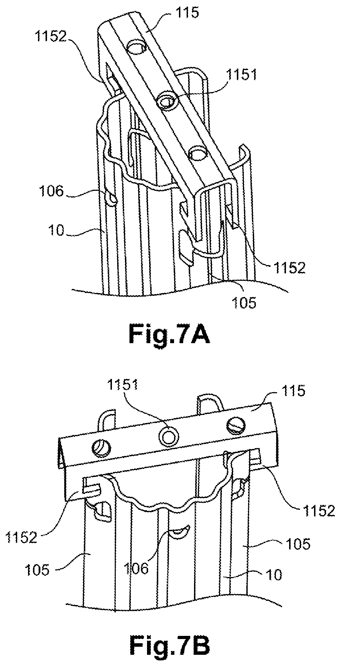

La figure 7A et la figure 7B représentent des vues en perspectives de la fixation de la mâchoire 115 au niveau du sommet du piquet bas 10. Afin de faciliter la visualisation de la fixation, l'arceau 11 n'est pas représenté sur les figures 7A-B.

Le maintien de l'arceau 11 au niveau du piquet bas 10 est réalisé au moyen des crochets 1152 de la mâchoire 115, lesdits crochets se positionnant de part et d'autre de languettes 105, contraignant ainsi les mouvements de translation dudit arceau dans le plan horizontal.

Pour renforcer le maintien de l'arceau 11 sur le piquet bas 10, comme cela peut être nécessaire dans les régions présentant de forts vents, l'arceau 11 peut également être maintenu au moyen d'un lien supplémentaire (non représenté sur ici) qui s'insère dans un trou 106 situé proche du sommet du piquet bas 10.

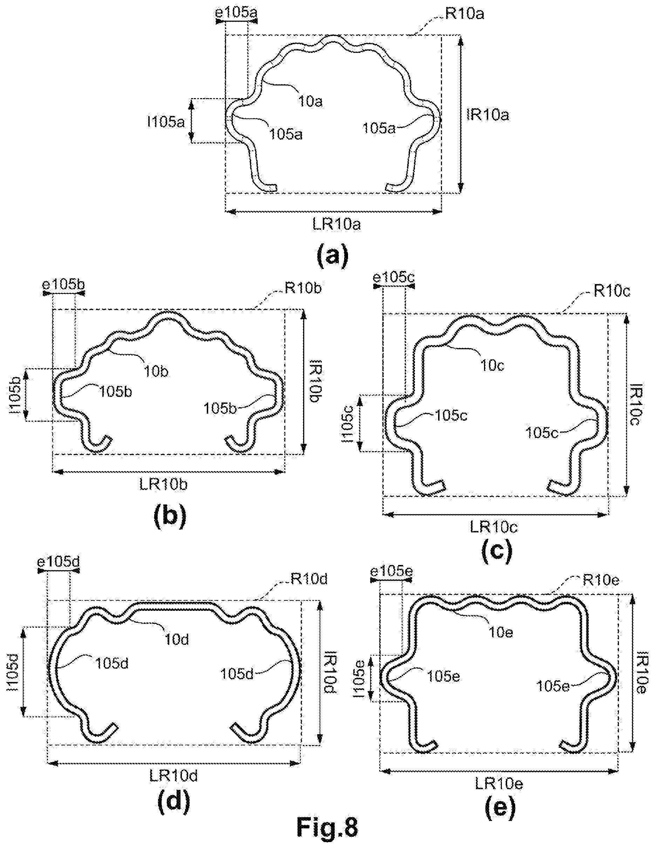

La figure 8 représente cinq profils différents de section de piquet bas 10a-e, sur lequel la mâchoire 115 s'adapte, en ayant modifié au préalable ses caractéristiques dimensionnelles, et permettant de se fixer au niveau des languettes 105a-e. Dans ce mode de réalisation, et pour mettre en évidence l'adaptabilité de la mâchoire 115 à différents types de piquet bas 10, les contours extérieurs des cinq profils de section de piquet bas 10a-e s'inscrivent dans des rectangles R10a-e, dont les largeurs IR10a-e et longueurs LR10a-e diffèrent entre les piquets 10a-e.

De plus, la longueur e1152 inter-crochet de la mâchoire 115 s'adapte afin que les crochets 1152 s'ajustent parfaitement avec les languettes 105a-e de largeur l105a-e. De plus, l'écart L1152 séparant les deux paires de crochet 1153 et 1154 est lui aussi adapté en fonction des longueurs LR10a-e.

Enfin, la longueur l1152 de la mâchoire est fonction des épaisseurs e105a-e des languettes 105a-e.

Le montage de la mâchoire 115 est alors effectué avec un jeu minimum entre les crochets 1152 et les languettes 105a-e qui ne nécessite pas l'utilisation d'outils.

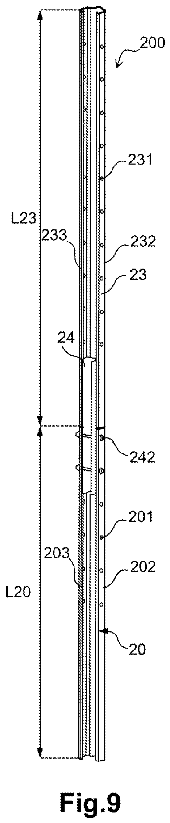

La figure 9 représente une vue en perspective d'un dispositif 200 modulable de palissage, selon un second mode de réalisation de l'invention, en configuration de culture, comporte principalement un piquet bas 20, un piquet haut 23, les piquets bas 20 et haut 23 étant fixés mutuellement au moyen d'une entretoise 24.

Le piquet bas 20 a une longueur L20 de l'ordre de 1,20 m, et le piquet haut 23 a quant à lui une longueur de l'ordre de 1 m. Comme précédemment, le piquet bas 20 est en partie enfoncé dans le sol, et reste en place durant une période d'une vingtaine d'années.

Afin de positionner les fils de palissage et fixer l'entretoise 24, le piquet bas 20 et le piquet haut 23 comportent respectivement des trous de fixation 201 et 231 sur des bords 202 et 203 du piquet bas 20, et sur des bords 232 et 233 du piquet haut 23.

Le dispositif 200 est préférablement utilisé comme piquet de tête, c'est-à-dire aux bouts de chaque de rang de culture, à la différence du dispositif 100 qui est utilisé préférablement comme piquet de rang, c'est-à-dire comme piquet intermédiaire.

Dans le mode de réalisation préféré, il n'y a pas d'arceau qui se fixe sur le piquet bas 20, sans que cela ne soit une limite de l'invention. En effet, et en fonction du besoin, l'homme du métier est en capacité d'adapté l'arceau 11 et la mâchoire 15 pour fixer un arceau sur le piquet bas 20.

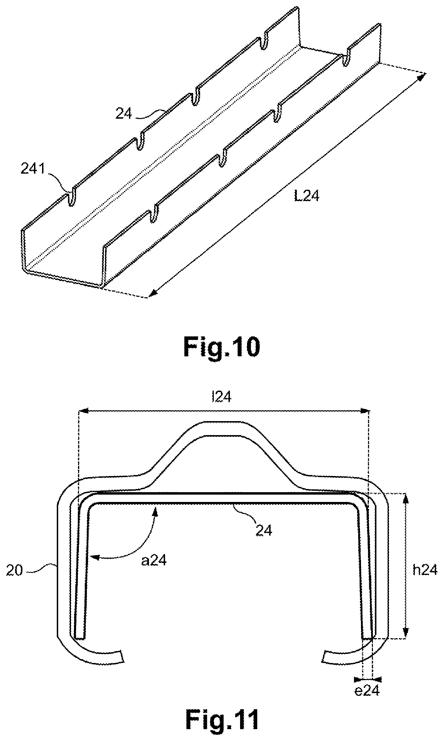

La figure 10 représente une vue en perspective de l'entretoise 24 qui permet de maintenir mécaniquement le piquet haut 23 avec le piquet bas 20, lorsque le dispositif 200 est assemblé en configuration de culture. L'entretoise 24 a une longueur L24 égale à 400 mm, et comporte une pluralité d'encoches 241, réparties uniformément ou non, le long. A la différence de l'entretoise 14 qui est fixée sur les piquets bas 10 et haut 13 au moyen de boulons, l'entretoise 24 est fixée sur les piquets bas 20 et haut 23 au moyen de boulons positionnés au niveau des encoches 241.

La figure 11 représente une vue de dessus de l'entretoise 24 lorsqu'elle est insérée dans le piquet bas 20. Comme pour le mode de réalisation précédent, l'insertion de l'entretoise 24 est réalisé de telle sorte que les mouvements à l'intérieur du piquet bas 20 soient limités et que l'ajustement entre l'entretoise 24 et le piquet bas 20 soit suffisant pour permet un coulissement entre les deux pièces.

Dans ce mode de réalisation, la section de l'entretoise 24 est définie par une largeur l24 de 60 mm, une hauteur h24 de 30 mm, une épaisseur e24 de 2 mm, ainsi que par un angle a24 de 92°. Il est important de rappeler que ces caractéristiques dimensionnelles sont à nouveau données à titre d'exemple, et que l'homme du métier pourra en définir d'autres afin de les adapter à des profils de sections de piquet bas 20 différents que celui représenté à la figure 11, et comme ceux représentés à la figure 8.

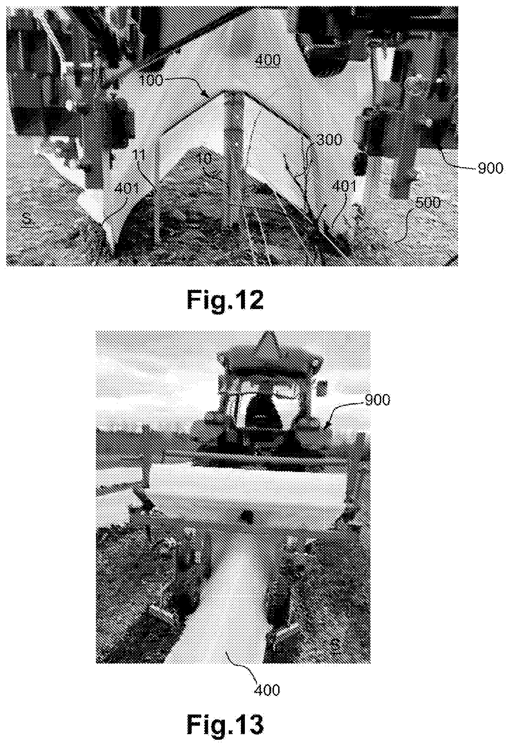

La figure 12 et la figure 13 représentent des vues en perspective d'une rangée de culture 300 équipée du dispositif 100, assemblé en configuration de protection, et sur lequel une bâche 400 est déployée, au moyen d'un engin agricole 900.

Lors de l'assemblage de la configuration de protection du dispositif 100, les extrémités 111a et 111b de l'arceau 11 ont été enfoncées dans le sol S. L'enfoncement de l'arceau 11 dans le sol est réalisé notamment en appliquant une pression, sur la partie horizontale 113 dudit arceau, au moyen d'un massue. Le transport des arceaux 11 peut être réalisé au moyen de l'engin agricole 900 habituellement utilisés dans ce type de culture, et dont les dimensions sont correctement adaptées aux espaces entre cultures. Ainsi, l'installation est grandement facilitée.

Une fois les arceaux 11 installés sur les piquets bas 10, des fils de palissage 500 sont positionnés dans les inserts 116 présents sur les arceaux 11. Pour rappel, le positionnement des fils de palissage 500 sur les arceaux 11 évite que lesdits fils ne soient en contact avec le sol, et cela dans le but de les préserver d'arrachement ou de dommages pouvant être causés par l'engin agricole 900 allé et venant entre les rangées de culture 300.

Enfin, la bâche 400 de protection recouvre le dispositif 100, procurant alors une protection contre les intempéries, notamment les chutes de neige importantes, le gel ou la grêle. La bâche 400 est préférablement fabriquée au moyen de fibres de polyester et de polypropylène tissées, plus communément appelé géotextile. De plus, la bâche 400 peut être renforcée ou souple afin de s'adapter aux différentes configurations de terrains et zones géographiques où se trouvent les cultures.

Avantageusement, lors du déploiement de la bâche 400, celle-ci est en partie enfoncée dans le sol S, et ces bords 401 sont recouverts de terre, ce qui leste la bâche 400. Ce lestage permet à la bâche 400 de ne pas se défaire lors de rafales de vent, et permet également d'isoler la masse d'air présente sous la bâche 400, de l'air environnant.

Par ailleurs, les efforts longitudinaux, dans le sens de la longueur de la rangée de culture 300 sont contenus dans les extrémités 111a et 111b de l'arceau 11, enfoncées dans le sol S, et dans la mâchoire 115.

Comme évoqué précédemment, et afin de renforcer le maintien de l'arceau 11 sur le piquet bas 10, ledit arceau peut être attaché audit piquet au moyen d'un lien supplémentaire (non représenté ici), qui s'insère au niveau du trou 106. Ce lien supplémentaire peut être un collier de serrage plastique, ou tout autre moyen d'attache adapté que l'homme du métier connaît. Cette attache complémentaire est effectuée au moment de l'installation du dispositif en configuration de protection, et avant le déploiement de la bâche 400. L'arceau 11 est alors plus solidement maintenu sur le piquet 10, et dans le cas de régions présentant de forts vents, résiste mieux aux soulèvements de la bâche 400, si le vent s'engouffre sous ladite bâche.

De plus, la bâche 400 étant positionnée proche du sol S, la hauteur du dispositif 100 en configuration de protection étant de l'ordre de 60 cm, la protection est plus efficace et plus robuste vis-à-vis des intempéries et conditions climatiques extrêmes. En effet, la prise au vent de la bâche 400 est ainsi minimisée, et ladite bâche est en capacité de supporter des charges importantes de neige, sans avoir besoin de déblayer la neige tombée : cette protection est conçue pour résister aux contraintes mécaniques conséquentes à des conditions climatiques à l'échelle de temps des saisons. Autrement dit, après de fortes chutes de neige, il n'est pas nécessaire de retirer la neige de la bâche 400 car la bâche 400 et le dispositif 100 sont suffisamment robustes pour continuer à protéger la rangée de culture 300.

Dans un mode de réalisation particulier, la bâche 400 de protection est un filet.

Avantageusement, lors du changement de la configuration de protection, vers la configuration de culture du dispositif 100, la bâche 400 est aisément enroulable lorsque celle-ci est retirée des arceaux 11 par l'engin agricole 900. Cela permet de faciliter le stockage de la bâche 400 et de la réutiliser lors de la période hivernale suivante.

## Revendications

1. Dispositif (100, 200) modulable pour le palissage de culture, comportant un piquet bas (10, 20), un arceau (11), un piquet haut (13, 23), des extrémités (111a, 111b) de l'arceau (11) étant enfoncées dans le sol, l'arceau (11) étant apte à être recouvert en partie ou intégralement par une bâche (400) de protection, **caractérisé en ce que** ledit arceau peut servir à positionner des fils de palissage (500) au moyen d'une pluralité d'insert (116), et ledit piquet haut pouvant servir à positionner des fils de palissage (500) au moyen d'une pluralité d'encoches (131), l'arceau et le piquet haut sont amovibles et s'adaptent un seul à la fois sur le piquet bas.

2. Dispositif (100) selon la revendication 1, dans lequel l'arceau (11) est maintenu sur le piquet bas (10) au moyen d'une mâchoire (115) dudit arceau.

3. Dispositif (100) selon la revendication 2, dans lequel l'arceau (11) et la mâchoire (115) sont solidaires entre eux.

4. Dispositif (100) selon la revendication 2 ou la revendication 3, dans lequel des crochets (1152) de la mâchoire (115) maintiennent ladite mâchoire au niveau de languettes (105) du piquet bas (10).

5. Dispositif (100, 200) selon la revendication 1, dans lequel le piquet haut (13, 23) est maintenu sur le piquet bas (10, 20) au moyen d'une entretoise (14, 24) du piquet haut (13, 23).

6. Dispositif (100, 200) selon la revendication 5, dans lequel le piquet haut (13, 23) et l'entretoise (14, 24) sont solidaires entre eux.

7. Dispositif (100) selon l'une quelconque des revendications précédentes, dans lequel les extrémités (111a, 111b) de l'arceau (11) sont aplaties ou profilées.

8. Dispositif (100, 200) selon l'une quelconque des revendications précédentes, dans lequel le piquet bas (10, 20) est sensiblement droit suivant une longueur (L10, L20) dudit piquet.

9. Dispositif (100, 200) selon l'une quelconque des revendications précédentes, dans lequel le piquet haut (13, 23) est sensiblement droit suivant une longueur (L113, L213) dudit piquet.

10. Rangée de culture (300), **caractérisée en ce qu'**elle comporte au moins un dispositif (100) modulable pour le palissage de culture selon l'une des revendications 1 à 9.

## Patentansprüche

1. Modulierbare Vorrichtung (100, 200) zum Spaliererziehen von Kulturen, die einen unteren Pfahl (10, 20), einen Bügel (11) und einen hohen Pfahl (13, 23) aufweist, wobei Enden (111a, 111b) des Bügels (11) in den Boden eingedrückt sind, wobei der Bügel (11) teilweise oder vollständig mit einer Schutzplane (400) abgedeckt werden kann, **dadurch gekennzeichnet, dass** der Bügel zum Positionieren von Spalierdrähten (500) mittels einer Vielzahl von Einsätzen (116) dienen kann, und wobei der hohe Pfahl zum Positionieren von Spalierdrähten (500) mittels einer Vielzahl von Kerben (131) dienen kann, der Bügel und der hohe Pfahl abnehmbar sind und jeweils nur einzeln auf den unteren Pfahl aufgesetzt werden können.

2. Vorrichtung (100) nach Anspruch 1, wobei der Bügel (11) mittels einer Backe (115) des Bügels am unteren Pfahl (10) gehalten wird.

3. Vorrichtung (100) nach Anspruch 2, wobei der Bügel (11) und die Backe (115) fest miteinander verbunden sind.

4. Vorrichtung (100) nach Anspruch 2 oder Anspruch 3, wobei Haken (1152) der Backe (115) die Backe an den Laschen (105) des unteren Pfahls (10) halten.

5. Vorrichtung (100, 200) nach Anspruch 1, wobei der obere Pfahl (13, 23) mittels eines Abstandshalters (14, 24) des oberen Pfahls (13, 23) am unteren Pfahl (10, 20) gehalten wird.

6. Vorrichtung (100, 200) nach Anspruch 5, wobei der hohe Pfahl (13, 23) und der Abstandshalter (14, 24) fest miteinander verbunden sind.

7. Vorrichtung (100) nach einem der vorhergehenden Ansprüche, wobei die Enden (111a, 111b) des Bügels (11) abgeflacht oder profiliert sind.

8. Vorrichtung (100, 200) nach einem der vorhergehenden Ansprüche, wobei der untere Pfahl (10, 20) im Wesentlichen gerade entlang einer Länge (L10, L20) des Pfahls ist.

9. Vorrichtung (100, 200) nach einem der vorhergehenden Ansprüche, wobei der hohe Pfahl (13, 23) im Wesentlichen gerade entlang einer Länge (L113, L213) des Pfahls ist.

10. Kulturreihe (300), **dadurch gekennzeichnet, dass** sie mindestens eine modulierbare Vorrichtung (100) zum Spaliererziehen von Kulturen nach einem der Ansprüche 1 bis 9 aufweist.

## Claims

1. Modular device (100, 200) for trellising plants, comprising a bottom stake (10, 20), a hoop (11), a top stake (13, 23), ends (111a, 111b) of the hoop (11) being pushed into the ground, the hoop (11) being able to be covered in part or entirely by a protective tarpaulin (400), **characterized in that** said hoop can be used for positioning trellising wires (500) by means of a plurality of inserts (116), and said top stake can be used to position trellising wires (500) by means of a plurality of notches (131), the hoop (11) and the top stake being removable and fitting only one at a time on the bottom stake.

2. Device (100) according to claim 1, wherein the hoop (11) is held on the bottom stake (10) by means of a jaw (115) of said hoop.

3. Device (100) according to claim 2, wherein the hoop (11) and the jaw (115) are integral with each other.

4. Device (100) according to claim 2 or claim 3, wherein hooks (1152) of the jaw (115) hold said jaw on the tabs (105) of the bottom stake (10).

5. Device (100, 200) according to claim 1, wherein the top stake (13, 23) is held on the bottom stake (10, 20) by means of a spacer (14, 24) of the top stake (13, 23).

6. Device (100, 200) according to claim 5, wherein the top stake (13, 23) and the spacer (14, 24) are integral with each other.

7. Device (100) according to any one of the preceding claims, wherein the ends (111a, 111b) of the hoop (11) are flattened or profiled.

8. Device (100, 200) according to any one of the preceding claims, wherein the bottom stake (10, 20) is substantially straight along a length (L10, L20) of said stake.

9. Device (100, 200) according to any one of the preceding claims, wherein the top stake (13, 23) is substantially straight along a length (L113, L213) of said stake.

10. Crop row (300), **characterized in that** it comprises at least one modular device (100) for trellising plants according to one of claims 1 to 9.
